Europäisches Patentamt

(19) European Patent Office

Office européen des brevets

(11) Publication number: **0 217 416 B1**

## (12) EUROPEAN PATENT SPECIFICATION

(45) Date of publication of patent specification:
30.01.91 Bulletin 91/05

(21) Application number: 86113753.7

(22) Date of filing: 03.10.86

(51) Int. Cl.⁵: **G01F 11/26, B65D 25/52**

## (54) Measuring container with modified pour spout.

(30) Priority: 03.10.85 US 783920

(43) Date of publication of application:
08.04.87 Bulletin 87/15

(45) Publication of the grant of the patent:
30.01.91 Bulletin 91/05

(84) Designated Contracting States:
AT BE CH DE ES FR GB GR IT LI LU NL SE

(56) References cited:
GB-A- 2 116 522
US-A- 4 079 859
US-A- 4 298 038

(73) Proprietor: CONTAINER MFG., INC.
50 Baekeland Avenue
Middlesex New Jersey (US)

(72) Inventor: Jennings, Thomas J.
469 Bayberry Lane
Mountainside New Jersey (US)

(74) Representative: Baillie, Iain Cameron et al
c/o Ladas & Parry Isartorplatz 5
D-8000 München 2 (DE)

Jouve, 18, rue Saint-Denis, 75001 PARIS

## Description

A measuring container having a measuring head, a storage portion and a modified pour-spout, which serves to accurately measure discrete amounts of liquid poured out from the container, is disclosed in our U.S. patent #4,079,859, issued March 21, 1978. A modification of the container disclosed in the foregoing patent is disclosed in our U.S. patent #4,298,038, issued November 3, 1981, which includes a second opening, spaced-apart from the pour-out opening in the top of the container, the second opening being designed to facilitate filling the container.

It has been found that there is a need to improve the efficiency and reduce the cost of manufacturing and filling containers of the types disclosed and claimed in said U.S. patents Nos. 4,079,859 and 4,298,038.

Accordingly, it is the principal object of the present invention to provide structures and procedures which reduce the number of operational steps and which facilitate automation in the manufacture and filling of measuring containers of the general types disclosed in our patents Nos. 4,079,859 and 4,298,038.

In the container of the invention which has a separate filler opening, as shown in our patent No. 4,298,038, a modified pour-spout is formed by compression-molding a tube in the area back of the measuring head, the separate filler opening being sealed once the filler operation is complete. In this design, the handle may be formed in the usual manner being sculpted into the side of the primary storage container.

The design of the present invention lends itself to automation as applied during the manufacturing and filling processes.

In accordance with the invention there is provided an apparatus for measuring fluids dispensed from a primary container via a measuring head comprising :

a lower primary storage container for storing fluid, connected for fluid transfer via a neck to an upper container disposed above said lower primary storage container, said upper container comprising a measuring head, and a modified pour-spout, said measuring head and said modified pour-spout being formed by dividing said upper container substantially vertically at all but its upper end into two portions, a first of said portions at its lower end in the region of the neck being also separated substantially horizontally from said lower storage container so as to define said measuring head and said second portion defining said modified pour spout, said measuring head having at its top a pour-out spout with an opening, said modified pour-spout having an opening and a removable closure lying on the top of said upper container on the substantially vertical axes of said modified pour-spout, said upper container, said lower storage container, said substantially vertical division of said upper container and said substantially horizontal separation of said first portion of said upper container from said lower storage container being formed by compression moulding, characterized in that substantially vertical division of said upper container and said substantially horizontal separation of said first portion of said upper container from said lower storage container are achieved by compressing the appropriate regions of the lateral sides of said container, so that they contact to form a linear substantially vertical single-wall moulded barrier and a linear substantially horizontal single-wall moulded barrier respectively.

Other objects, features and advantages of the invention will be better understood with reference to the attached drawings and the specification hereinafter.

In the drawings :

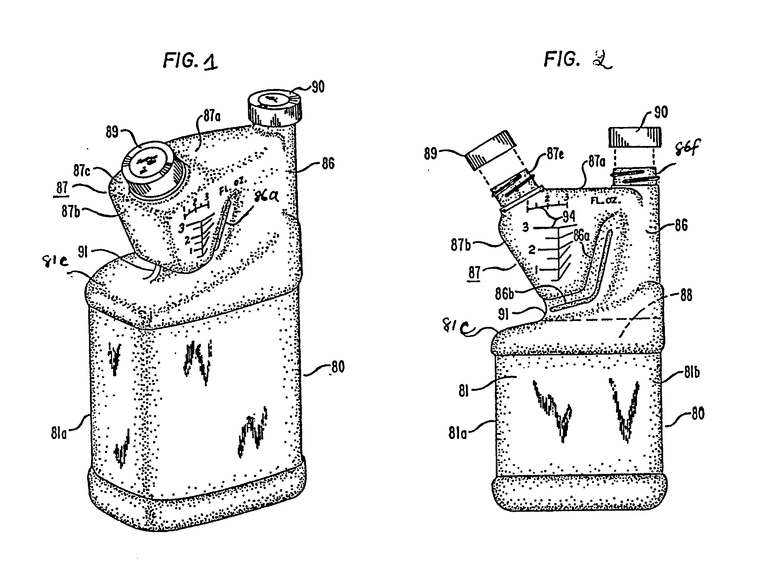

Fig. 1 shows, in perspective, a container of the present invention having a second opening, supplemental to the pour-out opening, in which container, the modified pour spout and the separation between the measuring head and the storage container, are formed by compression-molding a tube in the area back of the measuring head.

Fig. 2 shows the container of Fig. 1 in side elevation.

Fig. 3 shows the container of Figs. 1 and 2, in the condition of being filled through a filler tube interposed in supplemental opening.

Fig. 4 shows a section of the separation between the measuring head (87b) and container (80) along the plane indicated by arrows 4-4 in Fig. 3.

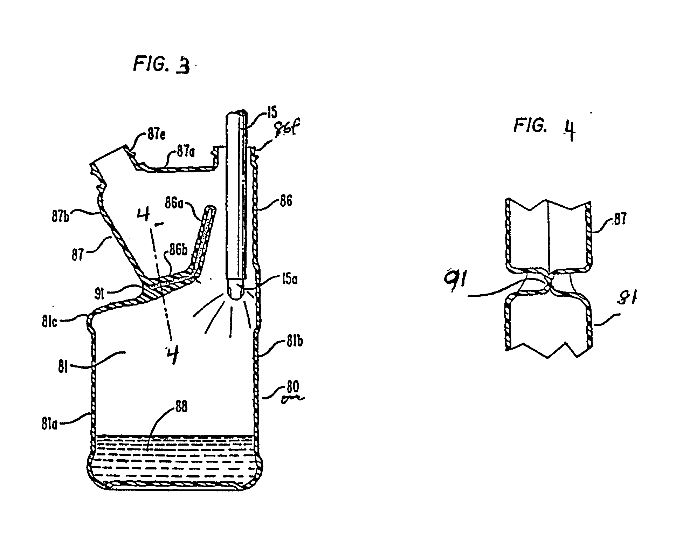

Referring to the drawings, the container (80), comprising a lower primary storage container 81a and an upper container 87, is designed to be filled through a special filler opening in the top, in addition to the opening in the pour-out spout, in a manner described in detail in our U.S. Patent No. 4,298,038, issued November 3, 1981. The upper container (87) comprises the measuring head (87b) and a modified pour-spout (86). The principal difference between the embodiment described in the prior patent, supra, and this improved embodiment, is that the modified pour-spout 86 in the embodiment under description is formed by compression-molding the rear portion of the upper container (87), in the area opposite the primary pour-out spout (87e) by compressing apporpriate regions of the lateral sides of the container (87). The modified pour-spout (86), is thus separated from the inside of the measuring head (87b) by a single-wall molded barrier (86a), which forms the inner wall of the modified pour-spout (86), and is bent inwardly at substantially a right angle to form a barrier (86b) between the measuring head (87b) and the lower storage container (81a) in the neck portion (91) of the container. As is most clearly shown in Figure 3, the molded barrier (86a) is preferably at a small clockwise angle with respect to the principal axis of the container.

The presently described container (80) is, for example, say, 190 mm (7-1/2 inches) in overall height, and, say, 32 mm (1-3/4 inches) wide, the lower primary storage container (81a) being substantially flat on its sides and ends, and rounded on the corners.

The front end of the primary storage container (81a) has a substantially straight edge which rises from the base, to a height of say, 102 mm (4 inches), forming a front shoulder (81c) which is curved inwardly for, say, about 38 mm (1-1/2 inches) to the inwardly-curved neck (91).

The rear end (81b), opposite the pour-out spout (87e), is substantially straight, extending to a height of about 190 mm (7-1/2 inches) above the base, including the modified pour-spout (86), which is, say, about 25.4 mm (an inch) in inner diameter and extends upward about 76 mm (3 inches) from the top of the primary storage container (81).

The measuring head (87) is substantially U-shaped, resting on the upper plane of the solid neck portion (91), the outer end (87b) forming an angle of, say, 38 degrees with the principal axis of the container (80), and the inner surface comprising barrier (86a), forming a smaller angle of, say, 20 degrees, with the principal axis of the container (80). End (87b) extends upward and outward, say, 64 mm (2-1/2 inches), forming a shoulder (87c) at its upper end from which the screwthreaded pour-out spout (87e) projects. The latter is, say, 22 m (7/8 inch) in inner diameter, and is closed with a conventional screw cap (89). The pour-out spout (87e) is connected to the filler opening (86f), by the flat closed top (87a), which is, say, 44 mm (1-3/4 inches) across. The filler opening (86f) is, say, about 25.4 mm (1 inch) in inner diameter, and may be sealed closed when the filling operation is completed, or closed with a conventional screw top (90).

This embodiment may be marked with the scales (94), illustrated in the side-elevational showing of Fig. 2, which are similar to those described in detail in prior Patents 4,079,859 and 4,298,038 included herein by reference.

Fig. 3 shows a filler tube (15) interposed into the filler opening (86f) along the principal axis of the container for filling the lower storage container (81) with liquid.

Fig 4 is a sectional showing through the molded barrier (86b) through the plane indicated by the arrows 4-4 of Fig. 3.

## Claims

1. An apparatus for measuring fluids dispensed from a container (80) via a measuring head (87b) comprising :

a lower primary storage container (81a) for storing fluid, connected for fluid transfer via a neck to an upper container (87) disposed above said lower primary storage container (81a), said upper container (87) comprising a measuring head (87b), and a modified pour-spout (86), said measuring head (87b) and said modified pour-spout (86) being formed by dividing said upper container (87) substantially vertically at all but its upper end into two portions, a first of said portions at its lower end in the region of the neck being also separated substantially horizontally from said lower storage container (81a) so as to define said measuring head (87b) and said second portion defining said modified pour spout (86), said measuring head (87b) having at its top a pour-out spout (87e) with an opening, said modified pour-spout (86) having an opening (86f) and a removable closure (90) lying on the top of said upper container (87) on the substantially vertical axes of said modified pour-spout (86), said upper container (87), said lower storage container (81a), said substantially vertical division of said upper container (87) and said substantially horizontal separation of said first portion of said upper container (87) from said lower storage container (81a) being formed by compression moulding, characterized in that substantially vertical division of said upper container (87) and said substantially horizontal separation of said first portion of said upper container (87) from said lower storage container (81a) are achieved by compressing the appropriate regions of the lateral sides of said container (87), so that they contact to form a linear substantially vertical single-wall moulded barrier (86a) and a linear substantially horizontal single-wall moulded barrier (86b) respectively.

## Ansprüche

1. Vorrichtung zum Messen von aus einem Behälter (80) über einen Meßkopf (87b) abgegebenen Fluiden, mit :

einem unteren Hauptvorratsbehälter (81a) zur Fluidspeicherung, der zur Fluidüberführung über einen Kragen mit einem oberen Behälter (87) verbunden ist, der über dem unteren Hauptvorratsbehälter (81a) angeordnet ist, wobei der obere Behälter (87) einen Meßkopf (87b) und einen modifizierten Ausgießteil (86) aufweist, wobei der Meßkopf (87b) und der modifizierte Ausgießteil (86) dadurch gebildet sind, daß der obere Behälter (87) im wesentlichen vertikal zur Gänze bis auf sein oberes Ende in zwei Teile geteilt ist, von denen ein erster Teil an seinem unteren Ende im Bereich des Kragens auch im wesentlichen horizontal vom unteren Vorratsbehälter (81a) getrennt ist, um den Meßkopf (87b) zu definieren, und der zweite Teil den modifizierten Ausgießteil (86) difiniert, wobei der Meßkopf (87b) an seiner Oberseite einen Ausgießer (87e) mit einer Öffnung aufweist, der modifizierte Ausgießteil (86) eine Öffnung (86f) und einen abnehmbaren Verschluß (90) aufweist, der auf der Oberseite des oberen Behälters (87) in der im wesentlichen vertikalen Achse des modifizierten Ausgießteil (86) vorliegt, und der obere Behälter (87), der untere Vorratsbehälter (81a), die im wesentlichen vertikale Teilung des oberen Behälters (87) und die im wesentlichen horizontale Trennung des ersten Teils des oberen Behälters (87) vom unteren Vorratsbehälter (81) durch Formpressen gebildet sind, dadurch gekennzeichnet, daß die im wesentlichen vertikale Teilung des oberen Behälters (87) und die im wesentlichen horizontale Trennung des ersten Teils des oberen Behälters (87) vom unteren Vorratsbehälter (81a) durch Eindrücken der geeigneten Bereiche der lateralen Seiten des Behälters (87) zustandegebracht sind, so daß sie sich berühren, um eine im wesentlichen vertikale, lineare, geformte Einwand-Barriere (86a) bzw. eine im wesentlichen horizontale, lineare, geformte Einwand-Barriere (86b) zu bilden.

**Revendications**

1. Appareil pour mesurer les fluides distribués d'un récipient (80) par l'intermédiaire d'une tête de mesure (87b), comprenant :

un récipient de stockage primaire inférieur (81a) pour stocker le fluide, relié pour le transfert du fluide par l'intermédiaire d'un col à un récipient supérieur (87) disposé au-dessus dudit récipient de stockage primaire inférieur (81a), ledit récipient supérieur (87) comprenant une tête de mesure (87b) et un bec verseur modifié (86), ladite tête de mesure (87b) et ledit bec verseur modifié (86) étant formés en divisant en deux parties ledit récipient supérieur (87) sensiblement verticalement de toutes parts sauf à son extrémité supérieure, la première desdites parties à son extrémité inférieure dans la région du col étant aussi séparée sensiblement horizontalement dudit récipient de stockage inférieur (81a) de façon à définir ladite tête de mesure (87b) et ladite seconde partie définissant ledit bec verseur modifié (86), ladite tête de mesure (87b) ayant à son sommet un bec verseur (87e) avec une ouverture, ledit bec verseur modifié (86) ayant une ouverture (86f) et un bouchon amovible (90) au sommet dudit récipient supérieur (87) sur les axes sensiblement verticaux dudit bec verseur modifié (86), ledit récipient supérieur (87), ledit récipient de stockage inférieur (81a), ladite division sensiblement verticale dudit récipient supérieur (87) et ladite séparation sensiblement horizontale de ladite première partie dudit récipient supérieur (87) et dudit récipient de stockage inférieur (81a) étant formés par moulage par compression, caractérisé en ce que la division sensiblement verticale dudit récipient supérieur (87) et ladite séparation sensiblement horizontale de ladite première partie dudit récipient supérieur (87) et dudit récipient de stockage inférieur (81a) sont obtenues par compression des régions appropriées des côtés latéraux dudit récipient (87) de sorte qu'elles viennent en contact pour former une barrière moulée (86a) linéaire, sensiblement verticale, à paroi unique et une barrière moulée (86b) linéaire, sensiblement horizontale, à paroi unique, respectivement.

EP 0 217 416 B1

*FIG. 1*

*FIG. 2*

FIG. 3

FIG. 4